# EUROPÄISCHE PATENTSCHRIFT

(11) **EP 0 455 947 B1**
(45) Veröffentlichungstag und Bekanntmachung des Hinweises auf die Patenterteilung: **03.05.1995**
(21) Anmeldenummer: 91103070.8
(22) Anmeldetag: 01.03.1991
(51) Int. Cl.: C08K 9/04, C09C 3/04

(54) **Verfahren zum Granulieren von Resorcin/Kieselsäureabmischungen, die so erhaltenen Granulate und deren Verwendung**
Process for granulating resorcinol/silica mixtures, the granules so obtained and their use
Procédé pour granuler des mélanges résorcin/silice, les granulés obtenus et leur utilisation

(30) Priorität: 26.04.1990 DE 4013258
(43) Veröffentlichungstag der Anmeldung: 13.11.1991
(73) Patentinhaber: Degussa Aktiengesellschaft, 60311 Frankfurt (DE)
(72) Erfinder: Wolff, Siegfried. Dr., W-5303 Bornheim-Merten (DE); Görl, Udo, Dr., W-5309 Meckenheim (DE); Meier, Karl, W-5305 Alfter (DE)

(56) Entgegenhaltungen:
- EP-A- 0 173 061
- DE-B- 1 301 478

## Beschreibung

Die Erfindung betrifft ein Verfahren zum Granulieren von Resorcin/Kieselsäure-Abmischungen, die so erhaltenen Granulate und deren Verwendung.

Zur Verbesserung der Haftung zwischen textilen Festigkeitsträgern (Polyamid, Aramid, Cellulose, Polyester) oder Stahlcord (blank, verzinkt, vermessingt) und Gummi (Reifen, Fördergurte. Schläuche etc.) werden Haftverstärker eingesetzt.
Bei der direkten Zugabe der Haftvermittler zur Rohkautschukmischung (dry bonding) stehen zwei Möglichkeiten zur Verfügung. Bei Stahlcord (z.B. Stahlgürtel im Reifen, Hochdruckschläuche, Fördergurte mit Stahleinlage) finden Verwendung die zweiwertigen Salze des Cobalts (z.B. Cobaltnaphthenat) oder Resorcin/Formaldehyd/Kieselsäure-Systeme, während bei Textilcord nur das letztere System zur Anwendung kommt.

Beide Systeme besitzen, wenn auch unterschiedlich geartete Nachteile (Cobaltsystem: schlechtes Alterungsverhalten, Kautschukgift; Resorcin/Formaldehyd: höhere Mischungsviskosität, Versprödung der Mischung durch Harzbildung), so daß heute oft eine Kombination beider Systeme verwendet wird, um die Nachteile der einzelnen Systeme z.T. aufzuheben.

Am Anfang der Entwicklung des Resorcin/Formaldehyd/-Kieselsäure-Systems bestand das Problem des schlechten Dispergierverhaltens von Resorcin, das sich nur durch eine Einmischtemperatur von ca. 120^{o}C (Schmelzpunkt von Resorcin) verbessern läßt. Diese hohen Temperaturen werden jedoch in der Praxis nicht bei allen Mischungen erreicht.
Eine Möglichkeit dieses Problem zu lösen ist die feine Vermahlung von Resorcin mit Kieselsäure, wie sie im deutschen Patent 1301 478 beschrieben und im Degussa Haftsystem Cofill^{(R)}11 verwirklicht wurde.

Bei dem Mahlvorgang entsteht jedoch ein Produkt, das aufgrund seiner Staubentwicklung zu Problemen bei der Verarbeitung führen kann, wenn keine ausreichenden Schutzvorrichtungen vorhanden sind.

Aus diesem Grund wurden Entwicklungsarbeiten für ein staubarmes Produkt aufgenommen, die jedoch bisher zu keinem Erfolg führten.

Allgemein bekannt sind in diesem Zusammenhang die Probleme, die sich beim Granulieren von feinteiligen, pulverförmigen Stoffen, wie z.B. gefällten Kieselsäuren, ergeben.
Da Standardgranuliermethoden hier nicht zum Erfolg führten, wurden spezielle Verfahren entwickelt, bei denen die feinteiligen Stoffe vorverdichtet und gleichzeitig geformt wurden (DE-PS 18 07 714, EP-A-0 173 061).

Die naheliegende Annahme, daß diese Verfahren auch auf Kieselsäure/Resorcin-Abmischungen mit Erfolg zu übertragen wären, traf jedoch nicht zu.

Man erhielt nur ein sehr grobes, klumpiger Granulat, das sich sehr schlecht dispergieren ließ.

Aufgabe der Erfindung ist es, eine Abmischung von Resorcin und Kieselsäure in Granulatform bereitzustellen, die sich durch sehr geringes Stauben und gutes Dispergierverhalten in Kautschukmischungen auszeichnet.

Gegenstand der Erfindung ist ein Verfahren zum Granulieren von Resorcin/Kieselsäureabmischungen, dadurch gekennzeichnet, daß Abmischungen von 5 bis 95 Gew.-% Resorcin und 5 bis 95 Gew.-% gefällter Kieselsäure durch Förderschnecken zu zwei Preßwalzen transportiert werden, deren Achsen senkrecht übereinander angebracht sind und deren Anpressdruck variiert werden kann, dort kompaktiert, anschließend mit Hilfe eines Fladenbrechers ein Granulat mit der gewünschten maximalen Korngröße gewonnen und der verbleibende staubförmige Anteil abgetrennt wird, so daß maximal 6 Gew.-% des Granulats eine Korngröße <0,125 mm besitzen. Der Anpressdruck der Walzen, deren Oberfläche glatt oder strukturiert sein kann, wird zwischen 6 und 105 bar, insbesondere von 6 bis 25 bar, eingestellt.
Eine verwendbare Granulierpresse wird in der DE-OS 1 778 089 beschrieben, Fladenbrecher und zur Abtrennung des staubförmigen Anteils geeignete Sichter oder Sichterkaskaden sind ebenfalls allgemein bekannte Apparaturen.
Der abgetrennte Staub wird in die Granulierung zurückgeführt.

Die verwendeten gefällten Kieselsäuren besitzen eine spezifische Oberfläche von 1 bis 1000 m²/g, insbesondere 100 bis 250 m²/g (bestimmt nach BET mit Stickstoff, DIN 66131).

Es handelt sich dabei um im Kautschukbereich allgemein verwendete Kieselsäuren.

Gegenstand der Erfindung sind ebenfalls aus Resorcin und gefällter Kieselsäure bestehende Granulate mit einem Gehalt von 5 bis 95 Gew.% Resorcin und 5 bis 95 Gew.% gefällter Kieselsäure, insbesondere je 50 Gew.% Kieselsäure und Resorcin, einer Korngröße von 0,063 mm bis 10 mm, insbesondere von 1 bis 5 mm (<70 Gew.-%) und einem Schüttgewicht von 250 bis 550 g/l, insbesondere 350 bis 450 g/l.
Dieses Granulat zeichnet sich gegenüber einer pulverförmigen Abmischung von Resorcin und Kieselsäure durch folgende Eigenschaften aus:
1) es ist praktisch staubfrei, d. h., daß maximal 6 Gew.-% des Granulats eine korngröße <0,125 mm besitzen (ab∼10 bar max. 5 %).
2) das gegenüber der pulverförmigen Abmischung (∼200 g/l) deutlich erhöhte Schüttgewicht ermöglicht ein optimales Handling und eine bessere Lagerung,
3) es ist silier- und förderbar,
4) es zeigt ein besseres Dispergierverhalten in den zu vulkanisierenden Kautschukmischungen und
5) führt zu besseren Haftwerten zwischen Textil- oder Stahlcord und Gummi.

Die erfindungsgemäß hergestellten Granulate finden Verwendung in bekannten vulkanisierbaren Kautschukmischungen, die Resorcin und Kieselsäure enthalten.

Beispielhaft genannt sind die in der DE-PS 1 078 320 und bei Sprung,J., Burmester,K. (Kautschuk und Gummi, 33 (1980) 611-616) beschriebenen Mischungen.

Die Haftverstärkung basiert auf der Bildung eines Resorcin/Formaldehyd-Harzes. Hierzu muß die Mischung. neben dem erfindungsgemäßen Resorcin/Kieselsäuregranulat (Resorcineinsatzmenge in der Mischung zwischen 0,5 - 10 GT, bevorzugt 1,5 -5 GT) zusätzlich einen Formaldehydspender (z.B. Hexa K von Degussa oder Cohedur^{®}A von Bayer) in Mengen von 0,5 - 10 GT, bevorzugt 1 - 3 GT, enthalten. Darüberhinaus ist für eine gute Haftung, besonders an Stahlcord, weitere Kieselsäure (Menge zwischen 1 - 50 GT, bevorzugt 10 - 15 GT), über die Menge die sich bereits im erfindungsgemäßen Granulat befindet, hinaus erforderlich.

Zu den geeigneten Kautschukarten zählen mit Schwefel sowie Vulkanisationsbeschleuniger(n) zu Elastomeren vernetzbare Kautschuke und deren Gemische. Insbesondere sind dies die halogenfreien Kautschukarten, vorzugsweise sogenannte Dien-Elastomere. Zu diesen Kautschukarten zählen beispielsweise ölgestreckte, natürliche und synthetische Kautschuke wie Naturkautschuke, Butadienkautschuke, Isoprenkautschuke, Butadien-Styrol-Kautschuke, Butadien-Acrylnitril-Kautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke infrage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propyl-Copolymere, gegebenenfalls auch chemische Derivate des Naturkautschuks sowie modifizierte Naturkautschuke.

Des weiteren können die mit dem erfindungsgemäßen Resorcin/Kieselsäure-Granulat versehenen Kautschukmischungen weitere in der Kautschukindustrie übliche Komponenten enthalten, wie zum Beispiel (GT ≅ Gewichtsteile):
- übliche Verstärkungssysteme, d.h. Furnace-Ruße, Channel-Ruße, Flammruße, Thermalruße, Acetylenruße, Lichtbogenruße, CK-Ruße usw. sowie synthetische Füllstoffe wie Kieselsäuren, Silikate, Aluminiumoxidhydrate, Calciumcarbonate und natürliche Füllstoffe wie Clays. Kieselkreiden, Kreiden, Talke usw. sowie silanmodifizierte Füllstoffe,
- übliche in der Kautschukindustrie verwendete Vulkanisationsbeschleuniger (z.B. Sulfenamide, MBT, MBTS, Triazinbeschleuniger, Thiurame) alleine oder im Gemisch in Mengen von 0,1 bis 10 GT, bezogen auf 100 GT Kautschuk,
- Vulkanisationsverzögerer wie z.B. Vulkalent^{(R)}E, PVI, ebenfalls in Mengen von 0,1 bis 10 GT, bezogen auf 100 GT Kautschuk,
- ZnO und Stearinsäure als Promotoren der Vulkanisation in Mengen von 0,5 bis 10 GT Kautschuk
- in der Kautschukindustrie verwendete Alterungs-, Ozon-, Ermüdungsschutzmittel wie zum Beispiel IPPD, TMQ sowie auch Wachse als Lichtschutzmittel und deren Verschnitte,
- beliebige Weichmacher wie zum Beispiel aromatische, naphthenische, paraffinische, synthetische Weichmacher und deren Verschnitte,
- gegebenenfalls Silane wie zum Beispiel Bis-(3-triethoxysilylpropyl)-tetrasulfan. γ-Chlorpropyltriethoxysilan γ-Merkaptopropyltrimethoxysilan, Vinyltrialkoxysilane und deren Verschnitte in einer Menge von 0,1 bis 20 GT, bevorzugt 1 bis 10 GT, je 100 GT Füllstoff,
- gegebenenfalls Schwefel in einer Menge von 0,1 bis 10 GT je 100 GT Kautschuk,
- gegebenenfalls Farbstoffe und Verarbeitungshilfsmittel in der üblichen Dosierung.

Die Mischungsherstellung erfolgt in der in der Gummiindustrie bekannten Art und Weise in einem Innenmischer oder auf einem Walzwerk.

Der Anwendungsbereich der erfindungsgemäßen Granulate erstreckt sich auf Haftmischungen wie sie üblicherweise im Reifenbau z.B. im Gürtel-, Karkass- und Wulstringbereich eingesetzt werden, sowie auf technische Artikel mit Festigkeitsträger aus Textil- oder Stahlcord also z.B. Fördergurte, Keilriemen, Schläuche, z.T. Dichtungen und gummibeschichtete Gewebe.

### Prüfnormen für die Anwendung

| | Prüfmethode | Einheit |
|---|---|---|
| Dmax - D min | DIN 53529 | Nm |
| MS t35 (130°C) | DIN 53524 | min |
| Zugfestigkeit | DIN 53504 | MPa |
| Spannungswert 300 % | DIN 53504 | MPa |
| Weiterreißwiderstand | DIN 53507 | N/mm |
| Stoßelastizität | DIN 53512 | % |
| Shore-A-Härte | DIN 53505 | - |
| Haftung vermessingter und blanker Stahlcord | In einer Länge von 1 cm einvulkanisierter Stahlcord wird an der Zugdehnungsmaschine ausgerissen (N/cm) | |

In den Anwendungsbeispielen werden folgende Namen und Abkürzungen benutzt, deren Bedeutung hier aufgeführt wird.

| | |
|---|---|
| RSS 1 | ribbed smoked sheet (Naturkauschuk) |
| Natsyn®2200 | Polyisoprenkautschuk |
| CORAX®N 330 | Ruß, Oberfläche (BET: 82 m²/g) Degussa |
| Ultrasil®VN 3 Gran. | gefällte Kieselsäure, Degussa Oberfläche 175m²/g |
| Naftolen®ZD | aromatischer Weichmacher |
| Vulkanox®HS | 2,2,4-Trimethyl-1,2-dihydrochinolin (Bayer) |
| Hexa K | Hexamethylentetramin Degussa |
| Vulkacit®DZ | Benzothiazyl-2-dicyclohexylsulfenamid pulverförmige |
| Cofill®11 | Abmischung aus Resorcin/VN 3 50 : 50 Degussa |
| Crystex®OT 20 A | unlöslicher Schwefel |
| BS I | Resorcin/VN 3 Gran., 50:50, hergestellt bei 12 bar Anspreßdruck, Schüttgewicht 385 g/l |
| BS II | Resorcin/VN 3 Gran., 50:50, hergestellt bei 17 bar Anpreßdruck, Schüttgewicht 400 g/l |
| BS III | Resorcin/VN 3 Gran., 50:50, hergestellt bei 25 bar Anpreßdruck, Schüttgewicht 410 g/l |

### Granulierung eines Resorcin/Kieselsäuregemisches

100 kg Cofill 11 (Resorcin/VN3 50 : 50) werden mittels einer gegebenenfalls evakuierbaren. Doppelschnecke in den Spalt zwischen den gegeneinanderlaufenden Walzen eindosiert. Der Walzendruck wurde auf 17 bar eingestellt. Anschließend erfolgt die Zerkleinerung der aus dem Walzenspalt austretenden Fladen auf eine Granulatgröße 5mm mittels eines zweistufigen Brechers. Das gebrochene Granulat wird mittels eines Zick-Zack-Sichters durch Einblasen von Luft entstaubt. Der Staub wird pneumatisch in den Kompaktierprozeß zurückgeführt.

| Korngrößenverteilung des Granulats | | | |
|---|---|---|---|
| Fraktion | BS I 6-12 bar | BS II 17 bar | BS III 25 bar |
| <0,125 mm | 5,82 | 4,15 | 4,38 |
| 0,125-0,5 mm | 6,04 | 4,05 | 4,62 |
| 0,5 - 1,0 mm | 13,85 | 14,00 | 13,45 |
| 1,0 - 2,0 mm | 31,04 | 29,53 | 28,72 |
| 2,0 - 3,0 mm | 29,55 | 31,35 | 33,10 |
| 3,0 - 4,0 mm | 10,65 | 12,80 | 12,25 |
| >4,0 ≦5,0 | 3,05 | 3,32 | 3,48 |

| Test von Resorcin/Kieselsäure Granulat (BS I, BS II, BS III) gegen Cofill 11 in einer Stahlcordhaftmischung | | | | | |
|---|---|---|---|---|---|
| | 1* | 2* | 3 | 4 | 5 |
| RSS 1 | 30 | 30 | 30 | 30 | 30 |
| Natsyn 2200 | 70 | 70 | 70 | 70 | 70 |
| CORAX N 330 | 45 | 45 | 45 | 45 | 45 |
| Ultrasil VN 3 Gran. | 12,5 | 12,5 | 12,5 | 12,5 | 12,5 |
| ZnO RS | 8 | 8 | 8 | 8 | 8 |
| Stearinsäure | 1 | 1 | 1 | 1 | 1 |
| Naftolen ZD | 3 | 3 | 3 | 3 | 3 |
| Vulkanox HS | 1 | 1 | 1 | 1 | 1 |
| Cofill 11 Pulver | - | 5 | - | - | - |
| BS I (12 bar) | - | - | 5 | - | - |
| BS II (17 bar) | - | - | - | 5 | - |
| BS III (25 bar) | - | - | - | - | 5 |
| Hexa K | 1,5 | 1,5 | 1,5 | 1,5 | 1,5 |
| Vulkacit DZ | 0,7 | 0,7 | 0,7 | 0,7 | 0,7 |
| Crystex OT 20 A | 5 | 5 | 5 | 5 | 5 |

| Rheometerprüfung bei 145°C | | | | | |
|---|---|---|---|---|---|
| Dmax - Dmin (Nm) | 14,28 | 15,26 | 15,24 | 15,21 | 15,68 |
| MS t35 (min) | 14,3 | 17,4 | 18,1 | 18,2 | 19,1 |
| Modul 300 (MPa) | 14,1 | 16,5 | 19,9 | 19,6 | 19,7 |
| Weiterreißwiderstand (N/mm) | 17 | 16 | 18 | 17 | 18 |
| Elastizität (%) | 43 | 40 | 43 | 41 | 41 |
| Härte | 73 | 81 | 81 | 82 | 82 |
| Haftung vermessingter Stahlcord Mittelwert aus 10 Messungen (N/cm) | 219 | 362 | 388 | 391 | 376 |
| Haftung blanker Stahlcord (Mittelwert aus 10 Messungen) (N/cm) | 78 | 154 | 167 | 169 | 172 |

| | | | | | |
|---|---|---|---|---|---|
| * Vergleichsbeispiel | | | | | |

Das Beispiel zeigt, daß bei sonst nahezu gleichem Wertebild die Haftwerte beim Granulat um bis zu mehr als 11 Prozent höher liegen als beim Cofill 11 Pulver.

## Patentansprüche

1. Verfahren zum Granulieren von Resorcin/Kieselsäureabmischungen,
dadurch gekennzeichnet, daß Abmischungen von 5 bis 95 Gew.-% Resorcin und 5 bis 95 Gew.-% gefällter Kieselsäure durch Förderschnecken zu zwei Preßwalzen transportiert werden, deren Achsen senkrecht übereinander angebracht sind und deren Anpreßdruck variiert werden kann, dort kompaktiert, anschließend mit Hilfe eines Fladenbrechers ein Granulat mit der gewünschten maximalen Korngröße gewonnen und der verbleibende staubförmige Anteil soweit abgetrennt wird, so daß maximal 6 Gew.-% des Granulats eine Korngröße <0,125 mm besitzen.

2. Aus Resorcin und gefällter Kieselsäure bestehendes Granulat mit einem Gehalt von 5 bis 95 Gew.-% Resorcin und 5 bis 95 Gew.-% gefällter Kieselsäure, einer Korngröße zwischen 0,063 mm und 10 mm, einem Schuttgewicht von 250 bis 550 g/l, wobei maximal 6 Gew.-% des Granulats eine Korngröße <0,125 mm besitzen.

3. Verwendung der Granulate gemäß Anspruch 2 in vulkanisierbaren neben Schwefel, Beschleuniger und weiteren üblichen Bestandteilen Kieselsäure und Formaldehydspender enthaltenden Kautschukhaftmischungen,
dadurch gekennzeichnet, daß man das Granulat in der Menge einsetzt, daß die Kautschukmischung 1 bis 10 Gew.-Teile, bevorzugt 1,5 bis 5 Gew.-Teile Resorcin, bezogen auf 100 Gew.-Teile Kautschuk, enthält.

## Claims

1. A method of granulating mixtures of resorcinol and silicic acid, characterised in that mixtures of 5 to 95 wt.% resorcinol and 5 to 95 wt.% precipitated silicic acid are conveyed by screw conveyors to two press rolls having their axes disposed vertically above one another and having variable surface pressures and are compacted there, after which a granulate having the desired maximum particle size is produced by a lump-crusher and the remaining pulverulent part is separated, so that up to 6 wt.% of the granulate has a particle size of less than 0.125 mm.

2. A granulate consisting of resorcinol and precipitated silicic acid and containing 5 to 95 wt.% resorcinol and 5 to 95 wt.% precipitated silicic acid and having a particle size between 0.063 mm and 10 mm and a bulk weight of 250 to 550 g/l, up to 6 wt.% of the granulate having a particle size less than 0.125 mm.

3. Use of the granulates according to claim 2 in vulcanisable rubber adhesive mixtures containing silicic acid and formaldehyde donors in addition to sulphur, accelerators and other conventional components,
characterised in that the granulate is used in a quantity such that the rubber mixture contains 1 to 10 wt.%, preferably 1.5 to 5 wt.% of resorcinol per 100 parts by weight of rubber.

## Revendications

1. Procédé pour la granulation de mélanges résorcine/silice, caractérisé en ce qu'on transporte des mélanges constitués par 5 à 95 % en poids de résorcine et 5 à 95 % en poids de silice précipitée à travers des vis d'alimentation vers deux cylindres de compression dont les axes sont disposés verticalement l'un au-dessus de l'autre et dont la pression de compression peut être variée, en ce qu'on y compacte les mélanges, en ce qu'on fabrique ensuite des granulés présentant la grosseur maximale désirée des granules à l'aide d'un concasseur de gâteau et en ce qu'on sépare la proportion résiduelle de poussières de telle manière qu'au maximum 6 % en poids des granulés présentent une grosseur des granules < à 0,125 mm.

2. Granulés constitués par de la résorcine et de la silice précipitée, présentant une teneur de 5 à 95 % en poids de résorcine et de 5 à 95 % en poids de silice précipitée, une grosseur des granules comprise entre 0,063 et 10 mm, une densité de 250 à 550 g/l, au maximum 6 % en poids des granulés présentant une grosseur des granules < 0,125 mm.

3. Utilisation des granulés selon la revendication 2 dans des mélanges de caoutchoucs adhérents vulcanisables, contenant de la silice et un dispensateur de formaldéhyde en plus du soufre, des accélérateurs et des autres composants usuels, caractérisé en ce qu'on met en oeuvre les granulés en une quantité telle que le mélange de caoutchouc contienne 1 à 10 parties en poids, de préférence 1,5 à 5 parties en poids, de résorcine par rapport à 100 parties en poids de caoutchouc.
